# EUROPÄISCHE PATENTSCHRIFT

(11) **EP 2 897 338 B1**
(45) Veröffentlichungstag und Bekanntmachung des Hinweises auf die Patenterteilung: **21.03.2018**
(21) Anmeldenummer: 15000053.7
(22) Anmeldetag: 13.01.2015
(51) Int. Cl.: H04L 29/06

(54) **Verfahren zur Übertragung von Inhalten als Datenstrom**
Method for transmitting content as data stream
Procédé de transmission de contenus sous la forme d'un flux de données

(30) Priorität: 17.01.2014 DE 102014000422
(43) Veröffentlichungstag der Anmeldung: 22.07.2015
(73) Patentinhaber: Deutsche Telekom AG, 53113 Bonn (DE)
(72) Erfinder: Dörsam, Jürgen, 64658 Fürth (DE); Pfeffer, Uwe, 64291 Darmstadt (DE)
(74) Vertreter: Cohausz Hannig Borkowski Wißgott

(56) Entgegenhaltungen:
- US-A1- 2012 087 634
- US-B1- 7 103 906

## Beschreibung

Die Erfindung betrifft ein Verfahren und System zur Übertragung von Inhalten als Datenstrom von einem Anbieter-Server eines Inhalte-Anbieters zu einem von mehreren Kommunikationsgeräten eines Kunden über wenigstens ein Telekommunikationsnetzwerk, bei dem von dem Anbieter-Server ein an das genutzte Kommunikationsgerät des Kunden angepasster Datenstrom des ausgewählten Inhaltes über das wenigstens eine Telekommunikationsnetzwerk versendet wird, der Empfang durch das genutzte Kommunikationsgerät unterbrochen und mit demselben oder einen anderen der mehreren Kommunikationsgeräte zu einem späteren Zeitpunkt fortgesetzt wird.

Verfahren und Systeme dieser Art sind im Stand der Technik bekannt und werden beispielsweise eingesetzt bei Anbietern von "Video-on-Demand"-Diensten, aber grundsätzlich auch bei jeglichen anderen Anbietern, welche ihren Kunden den Bezug von Inhalten als Datenstrom ermöglichen. Als Inhalte werden demnach beispielhaft und nicht abschließend Videos und Musik verstanden, wobei die Inhalte sowohl als Live-Daten als auch als bereits vollständig gespeicherte Daten vorliegen können.

US 2012/087634 beschreibt ein System zum Bezug von Videodatenströmen.

US 7 103 906 beschreibt ein Media on demand system bei welchem der Medienzugriff mit einem zweiten Gerät des Kunden fortgesetzt werden kann.

Unter einem Datenstrom eines solchen Inhaltes wird verstanden, dass der Inhalt nicht in seiner Gesamtheit von dem Anbieter-Server auf ein Kommunikationsgerät überspielt wird, sondern nur der Teil von Daten, der zur augenblicklichen Nutzung des Inhaltes benötigt wird. Dafür wird oftmals ein genügend großer Teil von Daten in einem Zwischenspeicher des genutzten Kommunikationsgerätes vorgeladen, um mit diesen Daten die Nutzung des Inhaltes zu beginnen, wobei im Hintergrund weitere Teile der Daten von Anbieterserver als Datenstrom geladen werden. Zu keiner Zeit besteht daher beim Kunden eine Kopie des gesamten Inhaltes. Dieses Verfahren wird häufig zu Einhaltung der Urheberrechte an den Inhalten verwendet.

Ein Datenstrom ist dabei an das jeweils im Augenblick der Nutzung eingesetzte Kommunikationsgerät angepasst, also im Wesentlichen entsprechend den hardware- und softwaretechnischen Möglichkeiten dieses Kommunikationsgerätes codiert. Bekannte Codierungen von Video- oder Musikdaten sind z.B. MPEG, AVI, H264, MP3 etc. Die Erfindung ist auf keine der genannten Codierungen beschränkt, sondern kann jegliche mögliche derzeit bekannte oder noch zu entwickelnde Codierung zum Versenden und Empfangen von Inhalten als Datenstrom verwenden. Eine Anpassung des Datenstromes kann nicht nur durch Auswahl einer anderen Kodierung erfolgen, sondern auch durch Änderung der Parametrierung derselben Kodierung, also z.B. durch Wahl einer anderen Bildschirmauflösung, Framerate, Bitrate etc.

Es ist dabei weiterhin bekannt die codierten Daten in Datenpakete zu inkludieren und solche Datenpakete über wenigstens ein Kommunikationsnetzwerk zwischen Anbieter-Server und dem Kommunikationsgerät des Kunden zu versenden. Dabei erfolgt der Versand der Datenpakete wiederum entsprechend einem Protokoll-Standard, z.B. TCP/IP, RTSP oder ähnlichem. Die Erfindung ist wiederum auf keines der genannten Protokolle beschränkt, sondern kann jegliches mögliche derzeit bekannte oder noch zu entwickelnde Protokoll zum Versenden und Empfangen von Inhalten als paketbasierten Datenstrom verwenden.

Für das Versenden und Empfangen des Datenstromes werden bei diesen Verfahren oftmals mehrere miteinander verbundene Netzwerke gleichzeitig genutzt. Beispielsweise sind die Anbieter-Server und empfangenden Kommunikationsgeräte mit einem Zugang zum Internet versehen, wobei der Zugang durch weitere Netzwerke erfolgen kann, z.B. LAN, WAN, WLAN, Bluetooth, Mobilfunk (GMS, UMTS, LTE etc.). Auch hier kann die Erfindung jegliche Netzwerkstruktur von einem oder beliebig vielen Netzwerken in Kombination verwenden.

Kunden können bei Anbietern dieser Inhalte auf einem entsprechenden Anbieter-Server jeweils ein Benutzerkonto führen und nach Autorisierung und Bezahlung des Dienstes - oftmals als Flatrate oder als inhaltsindividuelle Bezahlung - die gewünschten Inhalte aus einem Gesamtkatalog von Inhalten auswählen, wofür die Inhalte-Anbieter auf ihren Anbieter-Server üblicherweise eine grafische Benutzerführung anbieten.

Häufig haben Kunden nicht nur bei einem solchen Anbieter ein Benutzerkonto, sondern bei mehreren und müssen bei der Anmeldung die entsprechend benötigten Anmeldedaten bereithalten, wie z.B. Benutzername und Passwort, was für die Kunden aufwändig und nachtteilig ist.

Die meisten Anbieter von Inhalten bieten die Möglichkeit, dass ein Kunde unter einem Benutzerkonto einen ausgewählten Inhalt, z.B. einen Spielfilm mit einer Vielzahl technisch unterschiedlicher Kommunikationsgeräte abrufen kann, da zum einen die verschiedenen Kunden jeweils verschiedene Kommunikationsgeräte besitzen, zum anderen aber auch jeder individuelle Kunde heute häufig mehrere verschiedene Kommunikationsgeräte nutzt.

Beispielsweise kann es vorgesehen sein als technisch verschiedene Kommunikationsgeräte die folgenden, nicht abschließend aufgezählten zu verwenden: stationäre Personalcomputer, insbesondere sogenannte Desktop-Rechner, tragbare Personalcomputer, insbesondere sogenannte Laptops oder Notebooks, Mobiltelefone, insbesondere sogenannte Smartphones, Tablet-Computer, PDA's, Spielekonsolen, sowie auch direkt netzwerkfähige Fernseher oder Musikanlagen.

Damit ein Inhalte-Anbieter all diese technisch verschiedenen Kommunikationsgeräte mit einem jeweils angepassten Datenstrom beliefern kann ist es nötig, dass ein jeweiliger Anbieter auf seinem Anbieter-Server den Inhalt in verschiedenen Format-Versionen, im Wesentlichen also mit verschiedenen Codierungen und / oder Bitraten und/oder Bildauflösungen etc. bereithält. Häufig wird dafür ein und derselbe Inhalt mehrfach beim Anbieterserver gespeichert, was seitens des Anbieters aufwändige und teure Ressourcen erfordert. Verschiedene Anbieter müssen zur Erzielung einer Konkurrenzfähigkeit im Wesentlichen jeweils für sich eine solche Infrastruktur bereitstellen.

Als aufwändig ist es ebenso anzusehen, dass ein Kunde die Nutzung mit einem ersten seiner mehreren technisch verschiedenen Kommunikationsgeräte beginnt, den Empfang unterbricht und später mit einem anderen seiner mehreren Kommunikationsgeräte fortsetzt.

In einem solchen Fall kann der Inhalte-Anbieter den ursprünglich gestoppten Datenstrom nicht einfach fortsetzen, sondern muss einen zum anderen Kommunikationsgerät passenden Datenstrom mit geeigneter Codierung auswählen oder erst erstellen und diesen ab der zeitlichen Unterbrechungsstelle des zuerst verwendeten Datenstromes versenden. Auch dies setzt einen strukturellen und organisatorisch hohen Aufwand voraus.

Es ist daher die Aufgabe der Erfindung ein Verfahren und System der eingangs genannten Art derart weiterzubilden, dass sowohl der Kunde eine komfortablere Nutzung ermöglicht bekommt als auch ein Inhalte-Anbieter, insbesondere mehrere Inhalte-Anbieter hinsichtlich der benötigten Infrastruktur entlastet wird/werden.

Diese Aufgabe wird durch ein Verfahren nach Anspruch 1 gelöst wobei erfindungsgemäf3 das (zuerst) genutzte Kommunikationsgerät des Kunden den Datenstrom mittelbar über einen in den Kommunikationsweg zwischen Anbieter-Server und dem genutzten Kommunikationsgerät geschalteten, insbesondere im öffentlichen Internet angeordneten Inhalte-Verwaltungsserver empfängt und der Inhalte-Verwaltungsserver bei einer Unterbrechung des Empfangs durch das genutzte Kommunikationsgerät von dem gewählten Inhalt wenigstens eine Kopie als Datenstrom erstellt und speichert, der an wenigstens ein anderes vom Kunden nutzbares Kommunikationsgerät der mehreren Kommunikationsgeräte angepasst ist.

Ein System zur Durchführung des Verfahrens sieht vor, dass in einem Telekommunikationsnetzwerk ein Inhalte-Verwaltungsserver angeordnet ist, der dafür vorgesehen ist, dass Inhalte die von einem Anbieterserver zu einen Kommunikationsgerät eines Kunden als Datenstrom versendet werden, im Kommunikationsweg über diesen Inhalte-Verwaltungsserver geleitet werden und dieser eingerichtet bei einer Unterbrechung des Empfangs durch das Kommunikationsgerät des Kunden wenigstens eines Kopie des Inhaltes anzufertigen und zu speichern, wobei der Inhalte-Verwaltungsserver die wenigstens eine Datenstrom-Kopie anpasst an wenigstens eines der anderen Kommunikationsgeräte des Kunden.

Dafür kann es vorgesehen sein, dass ein Kunde dem Inhalte-Verwaltungsserver Informationen über seine mehreren nutzbaren Kommunikationsgeräte zur Verfügung stellt, was z.B. dadurch geschehen kann, dass dem Kunden eine Auswahl von Kommunikationsgeräten durch den Inhalte-Verwaltungsserver vorgegeben wird und der Kunde die bei ihm vorhandenen Geräte selektiert, wodurch der Inhalte-Verwaltungsserver die benötigten Information über die beim Kunden nutzbaren Kommunikationsgeräte erhält.

Alternativ oder in Kombination mit der genannten Lösung kann es auch vorgesehen sein, dass der Kunde die ihm zur Nutzung zur Verfügung stehenden Kommunikationsgeräte jeweils verwendet, um eine Kommunikationsverbindung zwischen dem Kommunikationsgerät und dem Inhalte-Verwaltungsserver aufzubauen, wobei zum Inhalte-Verwaltungsserver das Kommunikationsgerät identifizierende Daten gesendet werden und der Inhalte-Verwaltungsserver auf diese Weise eine Information darüber erhält, welche verschiedenen Kommunikationsgeräte ein Kunde nutzen könnte und welche Anpassungen beim Datenstrom, insbesondere welche Codierungen für diese Geräte benötigt werden.

Entsprechend den auf diese oder andere Weise vorhandenen Informationen kann der Inhalte-Verwaltungsserver die evtl. zukünftig benötigten Datenströme im Voraus erstellen und speichern.

Es kann somit vorgesehen sein, dass der Inhalte-Verwaltungsserver zu einigen oder sogar allen nutzbaren Kommunikationsgeräten eines Kunden entsprechende Kopien, des Datenstromes erstellt und speichert, um bei einem Gerätewechsel beim Kunden zwecks Fortsetzung des Empfangs des zuvor gewählten Inhaltes sofortig den passenden Datenstrom bereit stellen zu können.

Durch das Verfahren wird der Anbieter hinsichtlich seiner Server-Ressourcen, insbesondere dem benötigten Speicherplatz entlastet, da nur noch die Notwendigkeit besteht einen oder nur wenige verschiedene Datenströme eines jeweiligen Inhaltes zu bevorraten und erfindungsgemäß der in die Kommunikation eingebundene Inhalte-Verwaltungsserver die evtl. benötigten Datenströme mit anderen Formaten / Codierungen als dem ursprünglich gewählten erstellt und speichert.

Die Erfindung kann demnach vorsehen, dass bei einer Fortsetzung des Empfangs des gewählten Inhaltes durch ein anderes als das ursprünglich genutzte Kommunikationsgerät aus der Menge der mehreren nutzbaren Kommunikationsgeräte des Kunden durch den Inhalte-Verwaltungsserver ein als Kopie vorliegender Datenstrom aus der Menge aller vorliegender Kopien in Abhängigkeit des bei der Fortsetzung genutzten Kommunikationsgerätes an das bei der Fortsetzung genutzte Kommunikationsgerät versendet wird.

Dafür können das gerade genutzte Kommunikationsgerät identifizierende Daten zwischen diesem und dem Inhalte-Verwaltungsserver ausgetauscht werden und der Server den benötigten Datenstrom in Abhängigkeit dieser Daten auswählen. Solche identifizierenden Daten können z.B. die Kommunikationskennungen -oder Adressen der Kommunikationsgeräte in einem oder mehreren der genutzten Netzwerke sein oder fest mit dem Geräte verbundene Kennungen wie z.B. IMEI, oder SIM-Nr., MAC-Adresse, .... etc.

Die Erfindung kann auch vorsehen, dass der Inhalte-Verwaltungsserver auch eine Kopie des gewählten Inhaltes als Datenstrom erstellt und speichert, die an das (zuerst) genutzte Kommunikationsgerät angepasst ist.

So besteht die Möglichkeit, dass bei einer Fortsetzung des Empfangs des gewählten Inhaltes durch das ursprünglich genutzte Kommunikationsgerät ab der zeitlichen Stelle der Unterbrechung oder ab einem Zeitpunkt in der Umgebung der zeitlichen Stelle der Unterbrechung entweder der ursprüngliche Datenstrom vom Anbieter-Server mittelbar über den Inhalte-Verwaltungsserver weiter versendet wird oder die angefertigte Kopie vom Inhalte-Verwaltungsserver versendet wird.

Die Erfindung kann vorsehen, dass die wenigstens eine (konvertierte oder auch nicht konvertierte) Kopie des gewählten Inhaltes ab einer zeitlichen Stelle erstellt wird, die auf den Zeitpunkt der Unterbrechung folgt oder zumindest in einer zeitlichen Umgebung um den Zeitpunkt der Unterbrechung liegt. In diesem Fall liegt auch auf dem Inhalte-Verwaltungsserver zu keiner Zeit eine vollständige Kopie aller Daten eines gewählten Inhaltes vor, was ggfs. aus urheberrechtlichen Gründen nötig sein kann.

So kann es hierfür vorgesehen sein, dass das erfindungsgemäße Verfahren der Kopieerstellung nur dann zum Einsatz kommen kann, wenn zuvor eine vorgegebene zeitliche Mindestlänge des gewählten Inhaltes konsumiert wurde, hingegen bei einer Unterschreitung dieser Mindestlänge ein Datenstrom bei einer Fortsetzung des Empfanges nur mit dem ursprünglich zuerst eingesetzten Kommunikationsgerät möglich ist, insbesondere hierbei der Datenstrom vom Anbieterserver und nicht als Kopie vom Inhalte-Verwaltungsserver bezogen wird.

Das erfindungsgemäße Verfahren kann vorsehen, dass ein Erstellen einer Kopie erfolgt durch einen weiteren Bezug des Datenstromes vom Anbieter-Server durch den Inhalte-Verwaltungsserver über den Zeitpunkt der Unterbrechung des Empfanges hinaus und Speicherung zumindest des weiter bezogenen Datenstroms. In diesem Fall kann also die Kommunikationsverbindung zwischen Inhalte-Verwaltungsserver und Kommunikationsgerät des Kunden bereits abgebaut sein, hingeben zwischen Inhalte-Verwaltungsserver und Anbieterserver weiter fortbestehen. In die gespeicherte Kopie kann auch ein Teil des schon vor der Unterbrechung bezogenen Datenstromes mit einfließen, z.B. ein Teil, der sich zum Zeitpunkt der Unterbrechung noch in einem Zwischenspeicher des Inhalte-Verwaltungsservers befindet.

Diese Art der Kopieerstellung hat auch den Vorteil, dass keine Informationsdaten über den Zeitpunkt der Unterbrechung gespeichert werden müssen, da ein Weiterbezug des Inhaltes mittels einer Kopie automatisch am Anfang der Kopie beginnt und dieser Anfang im Rahmen des erfindungsgemäßen Verfahrens in Abhängigkeit des Unterbrechungszeitpunktes definiert ist, denn erst ab dann bzw. in dessen zeitlicher Umgebung beginnt die Kopieerstellung.

Für eine Fortsetzung des Empfangs zum späteren Zeitpunkt mit demselben zuerst gewählten Kommunikationsgerät kann genau dieser weiter bezogene Datenstrom beim oder zumindest durch den Inhalte-Verwaltungsserver als Kopie gespeichert werden.

Für eine Fortsetzung des Empfangs zum späteren Zeitpunkt mit einem anderem als das zuerst gewählte Kommunikationsgerät kann die Erfindung vorsehen, den weiter bezogenen Datenstrom (ggfs. inklusive Pufferspeicheranteil) in einen konvertierten Datenstrom umzuwandeln, der an wenigstens eines der anderen durch den Kunden nutzbaren Kommunikationsgeräte angepasst ist und nur oder auch diesen konvertierten Datenstrom zu speichern.

Die Konversion und Speicherung kann je nach Anzahl der möglicherweise nutzbaren Kommunikationsgeräte des Kunden entsprechend mehrfach erfolgen.

Die Erfindung kann weiterhin vorsehen, dass die Erstellung und das Speichern einer Kopie des gewählten Inhaltes z.B. erfolgt nach einer Übermittlung einer Bestätigung von dem genutzten Kommunikationsgerät des Kunden an den Inhalte-Verwaltungsserver, insbesondere im Rahmen eines Kommunikationsdialoges, z.B. der anschließt an den Beendigung des Empfangs des Datenstromes.

So kann dafür Sorge getragen werden, dass Kopiespeicherungen nur erfolgen, wenn der Kunde dies auch ausdrücklich wünscht und nicht vorsorglich für einen Eventualfall Speicherressourcen verschwendet werden.

Eine Speicherung von Kopien kann jedoch auch vorgesehen sein aufgrund einer gespeicherten Konfiguration des Inhalte-Verwaltungsservers, insbesondere wobei die Konfiguration bereits vor dem Empfang des Inhaltes erfolgt ist. In der Konfiguration kann angegeben sein, für welche Kommunikationsgeräte der Inhalte-Verwaltungsserver die Kopien erstellen soll. Eine solche Konfiguration kann ein Kunde z.B. über ein Web-Interface des Inhalte-Verwaltungsservers pflegen, das dieser Server für diese und andere Zwecke anbietet.

Das Speichern der wenigstens einen Kopie kann in einem dem Inhalte-Verwaltungsserver und/oder dem Anbieter-Server zugeordneten Speicherbereich, insbesondere in einem Cloud-Speicher des Internets erfolgen. Insbesondere Kopien des gewählten Inhaltes die einen konvertierten Datenstrom umfassen werden bevorzugt in einem Speicherbereich gespeichert, welcher dem Inhalte-Verwaltungsserver zugeordnet ist, insbesondere was bedeuten soll, dass durch den Inhalte-Verwaltungsserver alleine auf einen solchen Speicher zugegriffen werden kann.

Hingegen kann eine Kopie des ursprünglichen Datenstromes ohne Konversion in einem Speicher gespeichert werden, der dem Anbieter-Server zugeordnet ist, insbesondere so, dass diese Kopie nur in einer Kommunikation über den Anbieter-Server zugegriffen werden kann, nicht hingegen durch den Inhalte-Verwaltungsserver alleine, wie es bei dem konvertierten Kopien der Fall sein kann.

Zwecks Erhöhung der Bedienerfreundlichkeit auf dem Inhalte-Verwaltungsserver kann es weiterhin vorgesehen sein, dass für Kunden dort ein jeweiliges Benutzerkonto geführt wird, insbesondere in welchem die Benutzerdaten wenigstens eines, bevorzugt mehrerer Anbieter-Server hinterlegt sind zur Anmeldung des Kunden am Anbieter-Server mittels Kommunikation zwischen Inhalte-Verwaltungsserver und Anbieter-Server. Hierzu kann wiederum ein Web-Interface des Inhalte-Verwaltungsservers genutzt werden. Es kann vorgesehen sein, dass ein Inhalte-Verwaltungsserver für diese und anderen Zwecke eine öffentlich zugreifbare Netzwerkadresse aufweist, z.B. im Internet, so dass jeder interessierte Kunde sich an diesem Server anmelden und diesen erfindungsgemäß nutzen kann.

So kann es ausreichen, dass sich der Kunde nur in sein Benutzerkonto am Inhalte-Verwaltungsserver anmeldet und dadurch angemeldet wird, bei wenigstens einem, bevorzugt gleich mehreren verschiedenen Anbieter-Servern, dadurch dass der Inhalte-Verwaltungsserver für den Kunden die Anmeldung bei diesen mehreren Server vornimmt mit den hinterlegten Anmeldedaten.

Eine weitere Ausführung kann auch vorsehen, dass die Kataloginhalte von mehreren Anbieter-Servern, also eine Übersicht aller Inhalte, die diese jeweils anbieten auf dem Inhalte-Verwaltungsserver zusammengefasst werden, insbesondere zu einem einzigen Katalog, der vom Kunden durchsuchbar ist.

Dabei kann durch den Inhalte-Verwaltungsserver eine eigene Kategorisierung der Inhalte vorgenommen werden oder der Inhalte-Verwaltungsserver übernimmt die Kategorisierung der verschiedenen Anbieter-Server. Es erschließt sich so der Vorteil, dass ein Kunde nicht in jedem seiner mehreren Benutzerkonten bei den verschiedenen Anbieter-Servern einen gewünschten Inhalt suchen muss, sondern auch diese Auswahl zentralisiert ist und vollständig über den Inhalte-Verwaltungsserver abgewickelt werden kann.

Nach der Auswahl eines Inhaltes wird dieser sodann erfindungsgemäß zumindest beim ersten Laden als Datenstrom von dem Anbieterserver geladen, bei dem der Inhalt ursprünglich katalogisiert ist und Kopien, zumindest konvertierte Kopien hiervon bei einer Unterbrechung des Empfang sodann erfindungsgemäß in einem vom Inhalte-Verwaltungsserver zugegriffenen Speicherbereich angelegt, insbesondere in der Internet-Cloud.

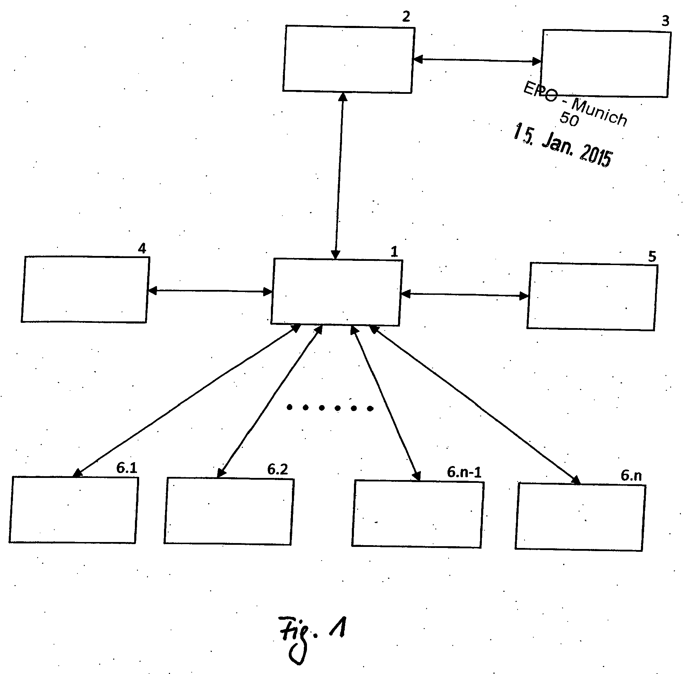

Ein Ausführungsbeispiel der Erfindung zeigt die einzige Figur 1.

Visualisiert ist hier ein im Internet angeordneter, bzw. z.B. darüber zugreifbarer Inhalte-Verwaltungsserver 1. Dieser kann als konkreter technischer Server ausgebildet sein oder auch nur als eine Software-Applikation auf einem Rechner, der ggfs. auch noch andere Aufgaben übernimmt.

Über ein Netzwerk, insbesondere wiederum das Internet ist der Inhalte-Verwaltungsserver 1 verbunden mit einem Anbieter-Server 2, z.B. eine IP-TV-Streaming-Dienstes bzw. Video-On-Demand-Dienstes.

Ein Kunde hat im vorliegenden Fall n technisch unterschiedliche Kommunikationsgeräte 6.1,...6.n mit denen er jeweils Inhalte des Anbieter-Server konsumieren kann, z.B. Filme ansehen oder Musik hören kann. Jedes der verschiedenen Kommunikationsgeräte kann die Daten in einem unterschiedlich angepassten Datenstrom benötigen, z.B. in unterschiedlicher Bildschirmauflösung, Bitrate, Codierung etc.

Erfindungsgemäß ist vorgesehen, dass ein Kunde mit seinem Kommunikationsgeräte 6.1 dem Empfang eines Datenstromes eines gewünschten Inhaltes startet und z.B. beginnt einen Film anzusehen.

Hierzu wählt er sich mit dem Kommunikationsgeräte 6.1. am Inhalte-Verwaltungsserver auf sein Benutzerkonto ein wählt einen Inhalt aus, entweder aus einem Katalog des Inhalte-Verwaltungsservers oder durch Weiterleitung der Kommunikation an den Anbieter-Server aus dessen Katalog, wofür in der Inhalte-Verwaltungsserver für den Kunden die Anmeldung an diesem vornimmt, z.B. mittels gespeicherter Anmeldedaten.

Der gewünschte Inhalt wird sodann vom Anbieter-Server 2 bezogen und mittelbar über den Inhalte-Verwaltungsserver 1 an das Kommunikationsgerät 6.1 gesendet und dort konsumiert, also z.B. der Film angesehen.

Wenn der Kunde nun entscheidet, den Inhalt nicht bis zum Ende zu konsumieren, sondern vorzeitig den Empfang zu beenden ist es erfindungsgemäß vorgesehen, dass der Inhalte-Verwaltungsserver wenigstens eine Kopie des Datenstromes des gewählten Inhaltes anfertigt, z.B. dadurch dass der Inhalte-Verwaltungsserver den Datenstrom trotz Beendigung des Empfangs beim Kunden-Kommunikationsgeräte 6.1. weiter empfängt.

Hier kann vorgesehen sein, dass der Inhalte-Verwaltungsserver eine Kopie des Datenstromes in dem für das Kommunikationsgerät 6.1 benötigten Format speichert und zwar bevorzugt im Speicher 3, auf den nur durch den Anbieter-Server 2 zugegriffen werden kann. Ggfs. kann der Inhalte-Verwaltungsserver 1den Anbieter-Server 2 durch Kommunikation veranlassen die Kopie unmittelbar aus den Daten des Servers 2 zu erstellen und im Speicher 3 abzulegen.

Der Inhalte-Verwaltungsserver 1 wird weiterhin erfindungsgemäß, insbesondere auf der Grundlage des weiterhin geladenen Datenstromes des gewählten Inhaltes auch wenigstens eine Kopie des Inhaltes erstellen mit einem konvertierten Datenstrom, der geeignet ist, später von einem anderen der Kommunikationsgeräte 6.2, bis 6.n geladen zu werden. Diese wenigstens eine Kopie wird in einem Speicher 4 oder 5, .B. in der Internet-Cloud gespeichert, auf den der Inhalte-Verwaltungsserver Zugriff hat, ohne dass der Anbieter-Server 2 in eine spätere Kommunikation beim Zugriff auf eine solche Kopie eingebunden ist.

Entscheidet demnach der Kunde zu einem späteren Zeitpunkt denselben Inhalt mit einem anderen Kommunikationsgeräte weiter zu nutzen, also mit einem der Geräte 6.2 bis 6.n, so kann Inhalte-Verwaltungsserver direkt auf die passende hierfür im Voraus gebildete Kopie zugreifen. Dabei erfolgt das Versenden ab dem Zeitpunkt zudem zuvor der Empfang gestoppt wurde.

Möchte der Kunde den Empfang mit dem ursprünglichen Kommunikationsgerät 6.1 weiter fortsetzen, so nimmt der Inhalte-Verwaltungsserver erneut Kontakt auf mit dem Anbieter-Server und bezieht die Kopie des Datenstromes aus dem Speicher des Anbieter-Servers 2.

## Patentansprüche

1. Verfahren zur Übertragung von Inhalten als Datenstrom von einem Anbieter-Server (2) eines Inhalte-Anbieters zu einem von mehreren Kommunikationsgeräten (6.1,...6.n) eines Kunden über wenigstens ein Telekommunikationsnetzwerk, bei dem von dem Anbieter-Server (2) ein an das zuerst genutzte Kommunikationsgerät (6.1) des Kunden angepasster Datenstrom des ausgewählten Inhaltes über das wenigstens eine Telekommunikationsnetzwerk versendet wird, der Empfang durch das zuerst genutzte Kommunikationsgerät (6.1) unterbrochen und mit demselben (6.1) oder einem anderen (6.2,....6.n) der mehreren Kommunikationsgeräte (6.1,...6.n) zu einem späteren Zeitpunkt fortgesetzt wird, bei dem das zuerst genutzte Kommunikationsgerät (6.1) des Kunden den Datenstrom mittelbar über einen in den Kommunikationsweg zwischen Anbieter-Server (2) und dem genutzten Kommunikationsgerät (6.1) geschalteten, insbesondere im öffentlichen Internet angeordneten Inhalte-Verwaltungsserver (1) empfängt, **dadurch gekennzeichnet, dass** der Inhalte-Verwaltungsserver (1) bei einer Unterbrechung des Empfangs durch das zuerst genutzte Kommunikationsgerät (6.1) den Datenstrom von dem gewählten Inhalt vom Anbieter-Server über den Zeitpunkt der Unterbrechung hinaus weiter bezieht und in Abhängigkeit von zur Verfügung gestellten Informationen über die mehreren nutzbaren Kommunikationsgeräte im Voraus wenigstens eine Kopie als Datenstrom erstellt und speichert, der an wenigstens ein anderes vom Kunden nutzbares Kommunikationsgerät (6.2,....6.n) der mehreren Kommunikationsgeräte (6.1,....6.n) angepasst ist.

2. Verfahren nach Anspruch 1, **dadurch gekennzeichnet, dass** der Inhalte-Verwaltungsserver (1) auch eine Kopie des gewählten Inhaltes als Datenstrom erstellt und speichert, die an das zuerst genutzte Kommunikationsgerät (6.1) angepasst ist.

3. Verfahren nach einem der vorherigen Ansprüche, **dadurch gekennzeichnet, dass** bei einer Fortsetzung des Empfangs des gewählten Inhaltes durch eines anderes (6.2,...,6.n) als das zuerst genutzte Kommunikationsgerät (6.1) aus der Menge der mehreren nutzbaren Kommunikationsgeräte (6.1,...,6.n) des Kunden durch den Inhalte-Verwaltungsserver (1) ein als Kopie vorliegender Datenstrom aus der Menge aller vorliegender Kopien in Abhängigkeit des bei der Fortsetzung genutzten Kommunikationsgerätes (6.2,...,6.n) an das bei der Fortsetzung genutzte Kommunikationsgerät (6.2,...,6.n) versendet wird.

4. Verfahren nach einem der vorherigen Ansprüche, **dadurch gekennzeichnet, dass** bei einer Fortsetzung des Empfangs des gewählten Inhaltes durch das ursprünglich genutzte Kommunikationsgerät (6.1) ab der zeitlichen Stelle der Unterbrechung oder ab einem Zeitpunkt in der Umgebung der zeitlichen Stelle der Unterbrechung
a. der ursprüngliche Datenstrom vom Anbieter-Server (2) mittelbar über den Inhalte-Verwaltungsserver (1) weiter versendet wird oder
b. die angefertigte Kopie vom Inhalte-Verwaltungsserver (1) versendet wird.

5. Verfahren nach einem der vorherigen Ansprüche, **dadurch gekennzeichnet, dass** die wenigstens eine Kopie des gewählten Inhaltes ab einer zeitlichen Stelle erstellt wird, die auf den Zeitpunkt der Unterbrechung folgt oder zumindest in einer zeitlichen Umgebung um den Zeitpunkt der Unterbrechung liegt.

6. Verfahren nach einem der vorherigen Ansprüche, **dadurch gekennzeichnet, dass** ein Erstellen einer Kopie erfolgt durch einen weiteren Bezug des Datenstromes vom Anbieter-Server (2) durch den Inhalte-Verwaltungsserver (1) über den Zeitpunkt der Unterbrechung des Empfanges hinaus und Speicherung des weiter bezogenen Datenstroms, insbesondere unter Konvertierung des vollständigen oder nur des weiter bezogenen Datenstromes in einen konvertierten Datenstrom, der an wenigstens eines der anderen durch den Kunden nutzbaren Kommunikationsgeräte (6.2,...,6.n) angepasst ist.

7. Verfahren nach einem der vorherigen Ansprüche, **dadurch gekennzeichnet, dass** die Erstellung und das Speichern einer Kopie des gewählten Inhaltes erfolgt
a. nach einer Übermittlung einer Bestätigung von dem genutzten Kommunikationsgerät (6.1) des Kunden an den Inhalte-Verwaltungsserver (1), insbesondere im Rahmen eines Kommunikationsdialoges oder
b. aufgrund einer gespeicherten Konfiguration des Inhalte-Verwaltungsservers (1), insbesondere wobei die Konfiguration bereits vor dem Empfang des Inhaltes erfolgt ist.

8. Verfahren nach einem der vorherigen Ansprüche, **dadurch gekennzeichnet, dass** das Speichern der wenigstens einen Kopie erfolgt in einem dem Inhalte-Verwaltungsserver (1) und/oder dem Anbieter-Server (2) zugeordneten Speicherbereich (3, 4, 5), insbesondere in einem Cloud-Speicher des Internets.

9. Verfahren nach einem der vorherigen Ansprüche, **dadurch gekennzeichnet, dass** für Kunden auf dem Inhalte-Verwaltungsserver (1) ein jeweiliges Benutzerkonto geführt wird, insbesondere in welchem die Benutzerdaten wenigstens eines, bevorzugt mehrerer Anbieter-Server (2) hinterlegt sind zur Anmeldung des Kunden am Anbieter-Server (2) mittels Kommunikation zwischen Inhalte-Verwaltungsserver (1) und Anbieter-Server (2).

10. Verfahren nach einem der vorherigen Ansprüche, **dadurch gekennzeichnet, dass** die Kataloginhalte von mehreren Anbieter-Servern (2), insbesondere eine Übersicht aller Inhalte, die diese jeweils anbieten, auf dem Inhalte-Verwaltungsserver (1) zusammengefasst werden, insbesondere zu einem einzigen Katalog, der vom Kunden durchsuchbar ist.

## Claims

1. Method for transmitting contents as a data stream from a provider server (2) of a contents provider to one among multiple communication devices (6.1,...6.n) of a customer over at least one telecommunication network, in which a data stream of the selected content that is adapted to the first-used communication device (6.1) of the customer is sent by the provider server (2) over the at least one telecommunication network, the reception by the first-used communication device (6.1) is interrupted and is continued at a later point in time by the same (6.1) or another (6.2,...6.n) of the multiple communication devices (6.1,...6.n), in which the first-used communication device (6.1) of the customer receives the data stream indirectly via a contents management server (1) connected in the communication path between the provider server (2) and the used communication device (6.1), in particular arranged on the public internet, **characterized in that**, when there is an interruption in the reception by the first-used communication device (6.1), the contents management server (1) continues to obtain the data stream of the chosen content from the provider server beyond the time of the interruption and, depending on information made available about the multiple usable communication devices, prepares in advance and stores at least one copy as a data stream which is adapted to at least one other communication device (6.2,...6.n) that can be used by the customer of the multiple communication devices (6.1,...6.n).

2. Method according to Claim 1, **characterized in that** the contents management server (1) also prepares and stores a copy of the chosen content as a data stream which is adapted to the first-used communication device (6.1).

3. Method according to one of the preceding claims, **characterized in that**, when reception of the chosen content is continued by a communication device (6.2,...6.n) other than the first-used communication device (6.1) from the group of multiple usable communication devices (6.1,...6.n) of the customer, a data stream available as a copy from the group of all copies available, in dependence on the communication device (6.2,...6.n) used in the continuation, is sent by the contents management server (1) to the communication device (6.2,...6.n) used in the continuation.

4. Method according to one of the preceding claims, **characterized in that**, when reception of the chosen content is continued by the originally used communication device (6.1), as from the moment in time of the interruption or as from a point in time around the moment in time of the interruption,
a. the original data stream continues to be sent by the provider server (2) indirectly via the contents management server (1) or
b. the prepared copy is sent by the contents management server (1).

5. Method according to one of the preceding claims, **characterized in that** the at least one copy of the chosen content is prepared as from a moment in time that follows the point in time of the interruption or at least at a time around the point in time of the interruption.

6. Method according to one of the preceding claims, **characterized in that** preparation of a copy takes place by the data stream continuing to be obtained from the provider server (2) by the contents management server (1) beyond the point in time of the interruption of the reception and by the data stream that continues to be obtained being stored, in particular with conversion of the complete data stream or only the data stream that continues to be obtained into a converted data stream which is adapted to at least one of the other communication devices (6.2,...6.n) that can be used by the customer.

7. Method according to one of the preceding claims, **characterized in that** the preparation and storage of a copy of the chosen content is performed
a. after transmission of a confirmation by the used communication device (6.1) of the customer to the contents management server (1), in particular in the course of a communication dialogue, or
b. on the basis of a stored configuration of the contents management server (1), in particular where the configuration has already taken place before reception of the content.

8. Method according to one of the preceding claims, **characterized in that** the storing of the at least one copy takes place in a storage area (3, 4, 5) assigned to the contents management server (1) and/or the provider server (2), in particular in a cloud on the internet.

9. Method according to one of the preceding claims, **characterized in that** a respective user account is kept for customers on the contents management server (1), in particular an account in which the user data of at least one provider server (2), preferably multiple provider servers (2), are stored for registration of the customer on the provider server (2) by means of communication between the contents management server (1) and the provider server (2).

10. Method according to one of the preceding claims, **characterized in that** the catalogue contents of multiple provider servers (2), in particular an overview of all the contents that they respectively provide, are kept together on the contents management server (1), in particular to form a single catalogue that can be searched by the customer.

## Revendications

1. Procédé de transmission de contenus en tant que flux de données depuis un serveur fournisseur (2) d'un fournisseur de contenus à un parmi une pluralité d'appareils de communication (6.1, ...6.n) d'un client par le biais d'au moins un réseau de télécommunications, par lequel un flux adapté de données du contenu sélectionné est envoyé depuis le serveur fournisseur (2) à l'appareil de communication utilisé le premier (6.1), la réception par l'appareil de communication utilisé le premier (6.1) est interrompue et, soit avec le même appareil (6.1) soit avec un autre appareil (6.2, ...6.n) parmi la pluralité des appareils de communication (6.1, ...6.n), est reprise à un moment ultérieur,
par lequel le premier appareil de communication (6.1) du client reçoit le flux de données indirectement par un serveur de gestion de contenu (1) établi dans le canal de communication entre le serveur fournisseur (2) et l'appareil de communication (6.1) du client, en particulier agencé dans l'Internet public,
**caractérisé en ce que** le serveur de gestion de contenu (1) reprend et continue le flux de données du contenu sélectionné depuis le serveur fournisseur lors d'une interruption de la réception par le premier appareil de communication (6.1) du client à partir du moment de l'interruption et, en fonction des informations mises à disposition sur la pluralité des appareils de communication utilisables génère et enregistre en avance une copie en tant que flux de données, qui est adaptée à au moins un des autres appareils de communication (6.2, ...6.n) parmi la pluralité des appareils de communication (6.1, ...6.n).

2. Procédé selon la revendication 1, **caractérisé en ce que** le serveur de gestion de contenu (1) génère et enregistre une copie du contenu sélectionné en tant que flux de données, adaptée au premier appareil de communication (6.1).

3. Procédé selon l'une des revendications ci-dessus, **caractérisé en ce que** lors d'une reprise de la réception du contenu sélectionné par un appareil de communication (6.2, ...6.n) autre que le premier (6.1) parmi la pluralité des appareils de communication utilisables (6.1, ...6.n) du client par le biais du serveur de gestion de contenu (1), un flux de données présent en tant que copie parmi la totalité des copies présentes est envoyé à l'appareil de communication (6.2, ...6.n) utilisé lors de la reprise en fonction de l'appareil de communication (6.2, ...6.n) utilisé lors de la reprise.

4. Procédé selon l'une des revendications ci-dessus, **caractérisé en ce que** lors d'une reprise de la réception du contenu sélectionné par l'appareil de communication initial (6.1) à partir du moment de l'interruption ou d'un point temporel proche du moment de l'interruption,
a. le flux de données initial est envoyé depuis le serveur fournisseur (2) indirectement par le biais du serveur de gestion de contenu (1) ou
b. la copie faite est envoyée depuis le serveur de gestion de contenu (1).

5. Procédé selon l'une des revendications ci-dessus, **caractérisé en ce que** la copie du contenu sélectionné est générée à partir d'un moment, qui suit le moment de l'interruption ou est au moins situé à un moment proche du moment de l'interruption.

6. Procédé selon l'une des revendications ci-dessus, **caractérisé en ce que** la création d'une copie se produit au travers d'une relation supplémentaire du flux de données du serveur fournisseur (2) au travers du serveur de gestion de données (1) au moment de l'interruption de la réception et de l'enregistrement du flux de données lié, en particulier sous conversion du flux de données, en totalité ou seulement la partie liée, en un flux de données converti, adapté à au moins un des autres appareils de communication (6.2, ...6.n) utilisés par le client.

7. Procédé selon l'une des revendications ci-dessus, **caractérisé en ce que** la création et l'enregistrement d'une copie du contenu sélectionné se produisent
a. après une communication d'une confirmation depuis l'appareil de communication utilisé (6.1) du client au serveur de gestion de contenu (1), en particulier dans le cadre d'un dialogue de communication ou
b. en raison d'une configuration enregistrée du serveur de gestion de contenu (1), en particulier dans lequel la configuration est déjà établie avant la réception du contenu.

8. Procédé selon l'une des revendications ci-dessus, **caractérisé en ce que** l'enregistrement de la copie se produit dans un support de stockage (3, 4, 5) ordonné au serveur de gestion de contenu (1) et/ou au serveur fournisseur (2), en particulier dans un support de stockage dématérialisé sur Internet.

9. Procédé selon l'une des revendications ci-dessus, **caractérisé en ce qu'**un compte utilisateur individuel est géré pour le client sur le serveur de gestion de contenu (1), en particulier dans lequel les données utilisateurs d'au moins un, de préférence plusieurs serveurs fournisseurs (2), sont enregistrées pour connexion du client au serveur fournisseur (2) au moyen d'une communication entre serveur de gestion de contenu (1) et serveur fournisseur (2).

10. Procédé selon l'une des revendications ci-dessus, **caractérisé en ce que** les contenus du catalogue de plusieurs serveurs fournisseurs (2), en particulier un aperçu de tous les contenus que ceux-ci offrent, sont résumés sur le serveur de gestion de contenu (1), en particulier sur un catalogue que le client peut parcourir.
